# EUROPÄISCHE PATENTSCHRIFT

(11) **EP 3 231 258 B1**
(45) Veröffentlichungstag und Bekanntmachung des Hinweises auf die Patenterteilung: **30.07.2025**
(21) Anmeldenummer: 15813012.0
(22) Anmeldetag: 14.12.2015
(51) Int. Cl.: H05B 47/175, H04Q 9/00, H05B 47/19

(54) **VERFAHREN ZUR SELEKTIVEN EINSTELLUNG EINER GEWÜNSCHTEN HELLIGKEIT UND/ODER FARBE EINES BESTIMMTEN RAUMBEREICHES UND DATENVERARBEITUNGSVORRICHTUNG HIERZU**
METHOD FOR THE SELECTIVE ADJUSTMENT OF A DESIRED BRIGHTNESS AND/OR COLOR OF A SPECIFIC SPATIAL AREA, AND DATA PROCESSING DEVICE THEREFOR
PROCÉDÉ DE RÉGLAGE SÉLECTIF D'UNE LUMINOSITÉ ET/OU COULEUR SOUHAITÉE D'UNE ZONE D'ESPACE ET DISPOSITIF DE TRAITEMENT DE DONNÉES ASSOCIÉ

(30) Priorität: 12.12.2014 DE 102014225706
(43) Veröffentlichungstag der Anmeldung: 18.10.2017
(73) Patentinhaber: Fraunhofer-Gesellschaft zur Förderung der angewandten Forschung e.V., 80686 München (DE)
(72) Erfinder: BUES, Matthias, 70565 Stuttgart (DE); STEFANI, Oliver, 70569 Stuttgart (DE)
(74) Vertreter: Pfenning, Meinig & Partner mbB
(86) Internationale Anmeldenummer: PCT/EP2015/079557
(87) Internationale Veröffentlichungsnummer: WO 2016/092112

(56) Entgegenhaltungen:
- WO-A1-2007/110791
- WO-A1-2014/027275
- WO-A2-2014/078881
- WO-A2-2014/128162
- DE-A1- 102010 038 792
- GB-A- 2 494 537
- US-A1- 2012 300 011

## Beschreibung

Es wird ein Verfahren zur einfachen Einstellung einer gewünschten Helligkeit und/oder Farbe eines bestimmten Raumbereiches über ein mobiles Kommunikationsgerät bereitgestellt. Mit dem mobilen Kommunikationsgerät wird ein gewünschter Raumbereich anvisiert, der von mindestens einer Lichtquelle bestrahlt wird. Das Gerät erkennt den anvisierten Raumbereich und leitet die eingegebene, gewünschte Helligkeit und/oder Farbe für den Raumbereich an eine Datenverarbeitungsvorrichtung weiter. Diese steuert die Lichtquelle, bzw. mehrere auf den Raumbereich gerichteten Lichtquellen, sodass der gewünschte Raumbereich den eingegebenen Helligkeits- bzw. Farbwert erreicht. Es wird damit nicht die Lichtquelle direkt gesteuert, sondern indirekt eine Zielvorgabe gemacht, die von dem mobilen Kommunikationsgerät und der Datenverarbeitungsvorrichtung umgesetzt wird. Ein mobiles Kommunikationsgerät und eine Datenverarbeitungsvorrichtung werden vorgeschlagen.

Licht ist ein grundlegender und wesentlicher Bestandteil für das Wohlbefinden des Menschen. Die Lichtfarbe bzw. das Lichtspektrum wirkt sowohl emotional als auch biologisch auf den Menschen, vor allem auf die innere Uhr. Weiterhin sind Flächigkeit und Lichtrichtung sehr wichtige Faktoren für die menschliche Biologie (wie z.B. der Schlaf-/ Wachzyklus), die Gesundheit und das Wohlbefinden. Deshalb ist dynamisches Licht ein wichtiger Gegenstand der aktuellen Lichtforschung.

Die Bedeutung einer qualitativ und quantitativ optimalen Allgemeinbeleuchtung als wesentlicher Qualitätsfaktor von Arbeitsplätzen, Wohnräumen und anderen Bereichen ist durch die Forschung und Entwicklung der letzten Jahre gut belegt. Sie hat einen starken Einfluss auf Wohlbefinden und Leistungsfähigkeit des Menschen und damit auf die gesamte Lebensqualität. Außerdem bietet eine optimal ausgelegte und gesteuerte Allgemeinbeleuchtung hohe Potentiale zur Energieeinsparung. Infolgedessen werden heutige Beleuchtungslösungen für Innen- und auch Außenräume aller Art immer komplexer, denn sie setzen sich aus immer mehr einzeln steuerbaren Lichtquellen zusammen. Die LED-Technologie in Kombination mit hochintegrierter Steuerungselektronik und Datenvernetzung bieten hierfür die technischen Voraussetzungen.

Ein einfacher Lichtschalter (oder Gruppen davon) ist bei weitem nicht mehr ausreichend für eine vom Anwender handhabbare optimale Lichtsteuerung. Bereits heute werden deshalb für die Steuerung komplexer Beleuchtungslösungen meist graphische Benutzeroberflächen verwendet. Diese sind jedoch ebenfalls sehr komplex, da sie meist nur die einzelnen Leuchten abbilden. Aus Nutzersicht wird immer noch die Leuchte oder Gruppe an Leuchten (d.h. unmittelbar die Lichtquelle) gesteuert mit dem Ziel, eine bestimmte Lichtsituation zu erreichen. Die Nutzer interessiert aber vielmehr nur das Ergebnis, also die gewünschte Lichtsituation, und nicht die Ursache, also die dafür speziell benötigte Leuchtstärke bzw. Farbe der einzelnen Leuchten. Für eine intuitive und gleichzeitig optimale Lichtsteuerung wird daher eine Benutzungsschnittstelle benötigt, die anstelle der Steuerung von Leuchten die direkte Steuerung der Lichtverteilung und -situation im Raum in den Mittelpunkt rückt.

Im Stand der Technik wird bisher die Lichtsteuerung immer durch den Bezug zur Leuchte oder durch die Auswahl bestimmter vordefinierter Lichtszenarien (z.B. in einem Besprechungsraum: Präsentation, Besprechung) realisiert. Einerseits wird dies über Schalter/Taster oder berührungssensitive Flächen an der Wand oder an der Leuchte realisiert. Wenn nicht direkt an der Leuchte angebracht, muss hier meist der Bezug zur Leuchte erlernt werden. Jeder Schalter ist einer oder mehreren Leuchten zugeordnet. Eine komplexe Lichtinteraktion ist nicht möglich.

Andererseits ist auch eine direkte Steuerung der Leuchten über Touchdisplays bekannt (Wandmontage, Tablets, Smartphones, etc.). Hier wird meist eine Draufsicht des Raumes mit Leuchten dargestellt. Durch Auswahl der Leuchten auf einem Plan des Raumes können diese gesteuert werden. Diese Art der Interaktion ist meist recht zeitaufwendig und hat außerdem aus Nutzersicht immer den direkten Bezug zur Leuchte oder Leuchtengruppe, während den Nutzer eigentlich mehr das Beleuchtungsresultat und nicht dessen Ursache interessiert.

Ferner ist auch eine berührungslose Steuerung von Leuchten durch Gesten oder lokale Funktechnik im Stand der Technik bekannt, beispielsweise über Near-Field-Communication (NFC) oder die auf Bluetooth basierende "issea-con"-Technik.

Die WO 2014/078881 A2 offenbart ein Verfahren, bei dem die Konfiguration eines Leuchtmittels mittels eines mobilen Kommunikationsgerätes eingestellt wird. Hierbei wird ein optischer Sensor des mobilen Geräts direkt auf eine Lichtquelle gerichtet, um die von der Lichtquelle abgestrahlten lichttechnischen Parameter zu erfassen. Dieses Verfahren dient damit nur der direkten Konfiguration der Lichtquelle, da hierbei die Lichtquelle direkt gemessen wird, aber nicht die von der Lichtquelle bestrahlten Gegenstände. Eine einfache und direkte Steuerung der Helligkeit und/oder Farbe von Gegenständen, die von einer Lichtquelle oder mehreren Lichtquellen bestrahlt werden, ist somit nicht möglich.

Ausgehend hiervon war es die Aufgabe der vorliegenden Erfindung, ein Verfahren bereitzustellen, mit dem auf über ein mobiles Kommunikationsgerät auf einfache Art und Weise ein selektierter Raumbereich auf eine gewünschte Helligkeit und/oder Farbe eingestellt werden kann.

Die Aufgabe wird gelöst durch das Verfahren gemäß Anspruch 1 und das System gemäß Anspruch 13. Die abhängigen Ansprüche zeigen vorteilhafte Weiterbildungen auf.

Mit dem erfindungsgemäßen Verfahren kann somit einfach durch Zielen bzw. Ausrichten eines mobilen Kommunikationsgeräts (z.B. ein Smartphone) auf einen Raumbereich dieser gezielt und selektiv beleuchtet werden. Der Bediener des mobilen Kommunikationsgerätes muss dabei nicht wissen, welche Lichtquellen für die Beleuchtung des Raumbereichs relevant sind und wie diese für eine bestimmte Beleuchtungssituation eingestellt werden müssen. Er kann einfach den zu beleuchtenden Raumbereich mit seinem mobilen Kommunikationsgerät (z.B. Smartphone) anvisieren und die gewünschte Beleuchtungssituation in das mobile Kommunikationsgerät eingeben. Es kann somit eine wesentlich einfachere Einstellung der Lichtfarbe und/oder Helligkeit eines Raumbereichs eingestellt werden.

Ein weiterer Vorteil des erfindungsgemäßen Verfahrens ist, dass aus Sicht des Benutzers nicht die Ursache (also die Lichtquelle), sondern die Wirkung (das in dem bestimmten Raumbereich reflektierte bzw. gestreute Licht) gesteuert wird. Der Nutzer muss damit die Lichtquelle nicht mühsam so lange direkt verstellen, bis sich ein gewünschtes Lichtszenario im ausgewählten Raumbereich eingestellt hat. Die wahrgenommene Helligkeit und/oder Farbe des Raumbereichs kann daher in dem erfindungsgemäßen Verfahren schnell und subjektiv eingestellt werden. Die Einstellung ist unabhängig davon, wo die Lichtquelle im Raum montiert ist. So kann eine Schreibtischoberfläche von einem weit entfernten stark fokussiertem Strahler oder einer Lichtquelle direkt über dem Schreibtisch einfach und gezielt optimal beleuchtet werden.

Das Identifizieren des Raumbereiches in Schritt a) kann umfassen, dass ein optischer Sensor des mobilen Kommunikationsgeräts auf den Raumbereich ausgerichtet wird, wobei bevorzugt der Raumbereich über ein Trackingsystem (d.h. ein räumliches Positionierungs- und/oder Orientierungsmeßsystem) des mobilen Kommunikationselements identifiziert wird.

Das erfindungsgemäße Verfahren kann dadurch gekennzeichnet sein, dass das mobile Kommunikationsgerät mindestens ein Element ausgewählt aus der Gruppe bestehend aus optischer Sensor, gravimetrischer Sensor, Beschleunigungssensor, Gyroskop, Magnetsensor, GPS und Funkelement enthält, bevorzugt eine optische Kamera, ein Near-Field-Communication-Funkelement und/oder Bluetooth-Funkelement. Durch die Gegenwart dieser Elemente lässt sich die Position und Ausrichtung des mobilen Kommunikationsgerätes mit hoher Genauigkeit feststellen. Somit lässt sich auch der anvisierte Bereich auf einfache Art und Weise errechnen. Zudem kann das Kommunikationsgerät Information über seine Ausrichtung und Position als Signal an die Datenverarbeitungsvorrichtung übermitteln. Die Kombination der Elemente ermöglicht dabei eine höhere Genauigkeit als die einzelnen Elemente allein.

Das mobile Kommunikationsgerät kann ausgewählt sein aus der Gruppe bestehend aus Kommunikationsgeräten mit mindestens einer Eingabetaste und/oder mindestens einer drucksensitiven Eingabeoberfläche, bevorzugt ausgewählt aus der Gruppe bestehend aus Mobiltelefonen, Smartphones, Tablet-PCs, GPS-Anzeigegeräten und elektronischen Kompassen. Der Vorteil von Smartphones und Tablet-PCs liegt darin, dass man diese Geräte meist in seiner Nähe liegen hat. Folglich ist eine Einstellung der Helligkeit und/oder Farbe des bestimmten Raumbereichs unter minimalem Einsatz an Bewegung des Benutzers möglich. Der Benutzer muss sich daher für die Steuerung nicht erst in die Nähe einer bestimmten Lichtquelle bzw. einer Steuerungsvorrichtung an der Wand begeben. Ein weiterer Vorteil von Smartphones und Tablet-PCs bzw. allen Kommunikationsgeräten mit mindestens einer Eingabetaste (z.B. Lautstärketaste) und/oder mindestens einer drucksensitiven Eingabeoberfläche ist, dass die Steuerung der Helligkeit und/oder Farbe eines bestimmten anvisierten Raumbereichs weiter vereinfacht wird, da die Einstellung bereits mittels einer einfachen Tastbewegung und/oder Wischbewegung erfolgen kann ohne dass hierfür eine komplizierte Softwaresteuerung (z.B. eine "App") benötigt wird.

In einer bevorzugten Ausführungsform ist die Datenverarbeitungsvorrichtung ausgewählt aus der Gruppe bestehend aus PCs, bevorzugt PCs mit einem Empfangselement und/oder Sendeelement für Near-Field-Communication-Funkstrahlung und/oder Bluetooth-Funkstrahlung.

Das elektronische Kommunikationsgerät kann mit der Datenverarbeitungsvorrichtung stofflich verbunden sein, bevorzugt ist die Datenverarbeitungsvorrichtung in dem mobilen Kommunikationsgerät integriert.

Bevorzugt empfängt die Datenverarbeitungsvorrichtung die Signale des mobilen Kommunikationsgeräts über elektrische Leitungen, Lichtleitungen und/oder Funkstrahlung.

Die Eingabe der gewünschten Helligkeit und/oder Farbe kann durch eine Tastbewegung und/oder Schiebebewegung auf dem mobilen Kommunikationsgerät durchgeführt werden, bevorzugt durch eine Tastbewegung und/oder Schiebebewegung auf einem Touchscreen, auf Tasten und/oder auf einem Schieberegler des mobilen Kommunikationsgerätes, besonders bevorzugt durch eine Schiebebewegung nach oben, unten, links und/oder rechts. Ein Blickwechsel zwischen Bedienelement und zu beleuchtender Fläche muss damit nicht stattfinden, da die Benutzungsschnittstelle auch ohne eine komplexe graphische Repräsentation auf dem mobilen Kommunikationsgerät auskommt. Es genügen einfache Fingerbewegungen, die ohne Blick auf das mobile Kommunikationsgerät (z.B. Blick auf den Touchscreen eines Smartphones) ausführbar sind. Im einfachsten Fall können hierfür sogar die Laut-Leise-Tasten eines Smartphones als mobiles Kommunikationsgerät verwendet werden.

In einer bevorzugten Ausgestaltungsform ist die mindestens eine Lichtquelle ausgewählt aus der Gruppe bestehend aus LED-Strahler, Halogenleuchte und Laserstrahler.

Bevorzugt sind mindestens zwei Lichtquellen, besonders bevorzugt mindestens drei, vier, fünf, sechs, sieben, acht, neun oder zehn Lichtquellen, auf den Raumbereich gerichtet.

Die mindestens zwei Lichtquellen können bevorzugt
a) jeweils eine unterschiedliche charakteristische Lichtfrequenz aussenden; und/oder
b) von der Datenverarbeitungsvorrichtung als relevant für den bestimmten Raumbereich identifiziert werden; und/oder
c) jeweils unterschiedliche dritte Signale von der Datenverarbeitungsvorrichtung erhalten, bevorzugt unterschiedliche Signale in Bezug auf den kodierten Helligkeitswert und/oder Farbwert, insbesondere unterschiedliche Signale in Abhängigkeit von der Art der Lichtquellen und/oder der Entfernung der Lichtquellen zu dem bestimmten Raumbereich.

Die Aussendung charakteristischer Lichtfrequenzen durch die Lichtquelle(n) ist vorteilhaft, da somit jede Lichtquelle eindeutig von der eingebauten Kamera des mobilen Kommunikationsgerätes und damit auch vom Datenverarbeitungsgerät identifiziert werden kann. Wird eine bestimmte Lichtquelle an eine andere Stelle gebracht, so muss die Datenverarbeitungsvorrichtung umkonfiguriert werden, da die Lichtquelle an der anderen Stelle einen stärkeren bzw. schwächeren Einfluss auf die Helligkeit und/oder Farbe des bestimmten Raumbereichs hat. Durch die Identifikation der bewegten Lichtquelle über deren charakteristische Frequenz ist die Umkonfiguration vor allem beim Einsatz mehrerer Lichtquellen wesentlich vereinfacht.

Der gewünschte Raumbereich kann mindestens ein Objekt und/oder Subjekt enthalten oder im Wesentlichen daraus bestehen, bevorzugt mindestens einen Einrichtungsgegenstand und/oder mindestens ein Lebewesen, besonders bevorzugt einen Tisch, Stuhl und/oder eine Couch.

In einer bevorzugten Ausführungsform enthält der Raumbereich selbst keine Lichtquelle und ist bevorzugt lediglich zur Lichtstreuung und/oder Lichtreflektion geeignet.

Ferner wird gemäß Anspruch 13 ein System enthaltend eine Datenverarbeitungsvorrichtung, ein mobiles Kommunikationsgerät und mindestens eine Lichtquelle bereitgestellt.

Darüberhinaus wird ein mobiles Kommunikationsgerät bereitgestellt, das die erfindungsgemäße Datenverarbeitungsvorrichtung enthält.

Anhand der nachfolgenden Figuren und Beispiele soll der erfindungsgemäße Gegenstand näher erläutert werden ohne diesen auf die hier dargestellten spezifischen Ausführungsformen einschränken zu wollen.

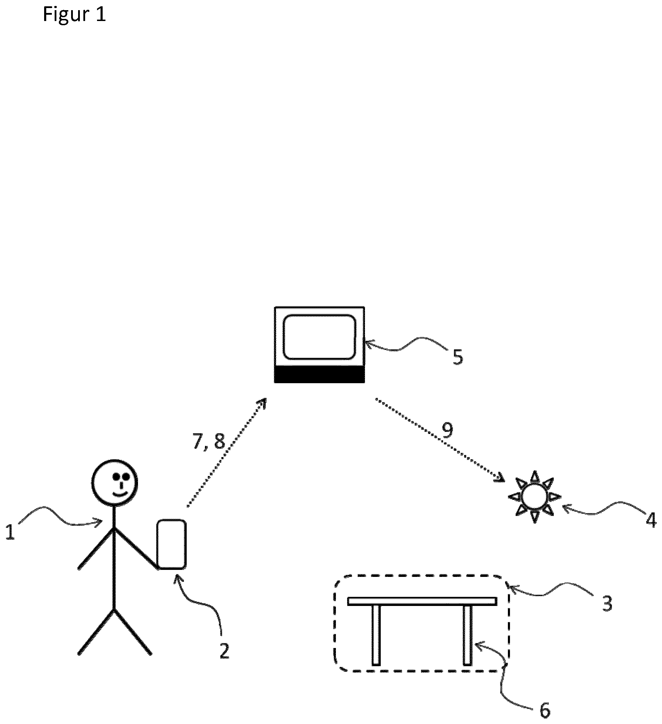

Figur 1 zeigt eine Illustration des erfindungsgemäßen Verfahrens. Der Mensch 1 benutzt sein Smartphone 2, mit dem er einen bestimmten Raumbereich 3 mit einem Tisch 6 anvisiert. Der Raumbereich 3 weist mindestens eine Lichtquelle 4 auf. Das Smartphone 2 kann über seine Trackingfunktion die Lokalisation des Raumbereichs 3 über ein erstes Signal 7 an eine Datenverarbeitungsvorrichtung 5 senden. Die Datenverarbeitungsvorrichtung 5 identifiziert anhand des ersten Signals 7 mindestens eine Lichtquelle 4, die für die Einstellung einer gewünschten Helligkeit und/oder Farbe des bestimmten Raumbereichs 3 relevant sind. Nach Eingabe einer gewünschten Helligkeit und/oder Farbe in das Smartphone 2 wird die gewünschte Helligkeit und/oder Farbe in ein zweites Signal 8 umgewandelt, das an die Datenverarbeitungsvorrichtung 5 gesendet wird. In der Datenübertragungsvorrichtung 5 wird ein drittes Signal 9 generiert und die mindestens eine Lichtquelle 4 gesendet. Die mindestens eine Lichtquelle 4 stellt daraufhin ihre Helligkeit und/oder Farbe so ein, dass die für den bestimmten Raumbereich 3 gewünschte Helligkeit und/oder Farbe erreicht wird.

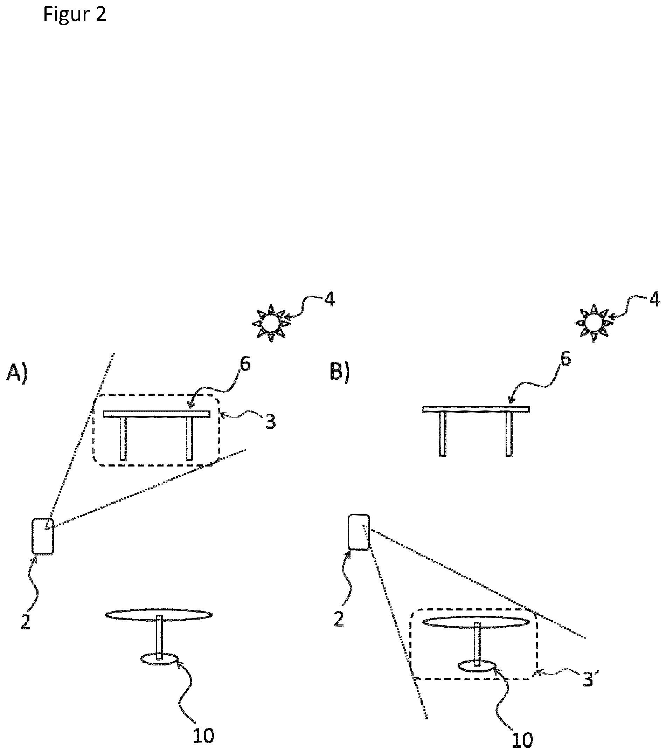

Figur 2 zeigt das Anvisieren von einem ersten Raumbereichen 3 und einem zweiten Raumbereich 3', welche sich eine Lichtquelle 4 teilen. Als mobiles Kommunikationsgerät dient hier ein mit einem Smartphone 2. In Fig. 2A ist dargestellt, wie ein eckiger Tisch 6 in dem ersten Raumbereich 3 mit dem Smartphone 2 anvisiert wird. Dies kann durch Anvisieren mit der eingebauten Kamera (optischer Sensor) des Smartphones 2 geschehen. Beispielsweise durch Betätigen der Touchoberfläche oder der Lautstärketasten auf dem Smartphone kann die Helligkeit und/oder Farbe auf dem eckigen Tisch eingestellt werden. In Fig. 2B ist dargestellt, wie (kurz danach) ein zum ersten Raumbereich 3 benachbarter zweiter Raumbereich 3' anvisiert wird, indem die Kamera des Smartphones 2 auf einen runden Tisch in dem zweiten Raumbereich 3' gerichtet wird. Nun kann die Helligkeit und/oder Farbe des runden Tisches 10 eingestellt werden. Bei nur einer Lichtquelle 4 verändert sich dadurch natürlich auch die Beleuchtung des eckigen Tisches 6. Dies ist jedoch nicht zwingend der Fall, wenn mehr als eine Lichtquelle 4 für die Ausleuchtung des ersten und zweiten Raumbereichs 3, 3' vorgesehen sind. In diesem Fall können der erste und zweite Raumbereich 3, 3' unabhängig voneinander in ihrer Helligkeit und/oder Farbe eingestellt werden.

### Beispiel - Verwendung des Verfahrens zu Hause

Herr Mustermann kommt am Abend nach Hause und möchte auf dem Wohnzimmertisch eine gemütliche Beleuchtung. In der Küche wird eine gute Arbeitsbeleuchtung zum Kochen benötigt wogegen auf dem Esstisch eine Beleuchtung benötigt wird, die das Essen lecker aussehen lässt. Durch Anvisieren des Wohnzimmertisches durch den optischen Sensor eines Smartphones kann dieser ausgewählt werden. Eine Datenverarbeitungsvorrichtung erkennt den Wohnzimmertisch (z.B. über Trackingtechnologie) und identifiziert Lichtquellen im Raum, die für die Ausleuchtung des Wohnzimmertisches relevant sind. Über das Smartphone kann man anschließend die Beleuchtung (Helligkeit und/oder Farbe) entsprechend seinen Wünschen eingeben und steuern. Zudem kann das Smartphone auch so konfiguriert sein, dass es eine ideale Beleuchtung vorschlägt wie z.B. gemütliche Beleuchtung für den Wohnzimmertisch und ein helles Licht für die Arbeitsplatte in der Küche.

## Patentansprüche

1. Verfahren zur einfachen und selektiven Einstellung einer gewünschten Helligkeit und/oder Farbe eines bestimmten Raumbereiches (3, 3'), auf den mindestens eine Lichtquelle (4) gerichtet ist, umfassend die Schritte:
a) Anvisieren des bestimmten Raumbereiches (3, 3') mit einem mobilen Kommunikationsgerät, wobei das mobile Kommunikationsgerät den anvisierten Raumbereich (3, 3') erkennt, diese Information in mindestens ein erstes Signal (7) umwandelt und an eine Datenverarbeitungsvorrichtung (5) sendet;
b) Empfang des mindestens einen ersten Signals (7) durch die Datenverarbeitungsvorrichtung (5), wobei die Datenverarbeitungsvorrichtung (5) das mindestens eine erste Signal (7) in den bestimmten Raumbereich (3, 3') umwandelt;
c) Eingabe in das mobile Kommunikationsgerät, wobei das mobile Kommunikationsgerät die Eingabe in mindestens ein zweites Signal (8) umwandelt, das an die Datenverarbeitungsvorrichtung (5) gesendet wird;
d) Empfang des mindestens einen zweiten Signals (8) durch die Datenverarbeitungsvorrichtung (5), wobei die Datenverarbeitungsvorrichtung (5) das mindestens eine zweite Signal (8) in einen bestimmten Helligkeitswert und/oder Farbwert umwandelt, basierend hierauf mindestens ein drittes Signal (9) generiert und an die mindestens eine Lichtquelle (4) sendet;
e) Empfang des mindestens einen dritten Signals (9) von der mindestens einen Lichtquelle (4), wobei die mindestens eine Lichtquelle (4) das mindestens eine dritten Signal (9) in den bestimmten Helligkeitswert und/oder Farbwert umwandelt und entsprechend ihre Helligkeit und/oder Farbe ändert, sodass in dem bestimmten Raumbereich (3, 3') die gewünschte Helligkeit und/oder Farbe erreicht wird
**dadurch gekennzeichnet, dass**
in Schritt b) die Datenverarbeitungsvorrichtung (5) aufgrund des bestimmten Raumbereiches (3, 3') mindestens eine Lichtquelle (4) als relevant für die Einstellung einer gewünschten Helligkeit und/oder Farbe identifiziert, und
es sich bei der Eingabe in das mobile Kommunikationsgerät in Schritt c) um eine Eingabe der gewünschten Helligkeit und/oder Farbe des Raumbereiches (3, 3') in das mobile Kommunikationsgerät handelt.

2. Verfahren gemäß Anspruch 1, **dadurch gekennzeichnet, dass** das Identifizieren des Raumbereiches (3, 3') in Schritt a) umfasst, dass ein optischer Sensor des mobilen Kommunikationsgeräts auf den Raumbereich (3, 3') ausgerichtet wird, wobei bevorzugt der Raumbereich (3, 3') über ein Trackingsystem des mobilen Kommunikationselements identifiziert wird.

3. Verfahren gemäß einem der vorhergehenden Ansprüche, **dadurch gekennzeichnet, dass** das mobile Kommunikationsgerät mindestens ein Element ausgewählt aus der Gruppe bestehend aus optischer Sensor, gravimetrischer Sensor, Beschleunigungssensor, Gyroskop, Magnetsensor, GPS und Funkelement enthält, bevorzugt eine optische Kamera, ein Near-Field-Communication-Funkelement und/oder Bluetooth-Funkelement.

4. Verfahren gemäß einem der vorhergehenden Ansprüche, **dadurch gekennzeichnet, dass** das mobile Kommunikationsgerät ausgewählt ist aus der Gruppe bestehend aus Kommunikationsgeräten mit mindestens einer Eingabetaste und/oder mindestens einer drucksensitiven Eingabeoberfläche, bevorzugt ausgewählt aus der Gruppe bestehend aus Mobiltelefonen, Smartphones (2), Tablet-PCs, GPS-Anzeigegeräten und elektronischen Kompassen.

5. Verfahren gemäß einem der vorhergehenden Ansprüche, **dadurch gekennzeichnet, dass** die Datenverarbeitungsvorrichtung (5)
ausgewählt ist aus der Gruppe bestehend aus PCs, bevorzugt PCs mit einem Empfangselement und/oder Sendeelement für Near-Field-Communication-Funkstrahlung und/oder Bluetooth-Funkstrahlung und/oder die Signale des mobilen Kommunikationsgeräts über elektrische Leitungen, Lichtleitungen und/oder Funkstrahlung empfängt.

6. Verfahren gemäß einem der vorhergehenden Ansprüche, **dadurch gekennzeichnet, dass** das elektronische Kommunikationsgerät mit der Datenverarbeitungsvorrichtung (5) stofflich verbunden ist, bevorzugt die Datenverarbeitungsvorrichtung (5) in dem mobilen Kommunikationsgerät integriert ist.

7. Verfahren gemäß einem der vorhergehenden Ansprüche, **dadurch gekennzeichnet, dass** die Eingabe der gewünschten Helligkeit und/oder Farbe durch eine Tastbewegung und/oder Schiebebewegung auf dem mobilen Kommunikationsgerät durchgeführt wird, bevorzugt durch eine Tastbewegung und/oder Schiebebewegung auf einem Touchscreen, auf Tasten und/oder auf einem Schieberegler des mobilen Kommunikationsgerätes, besonders bevorzugt durch eine Schiebebewegung nach oben, unten, links und/oder rechts.

8. Verfahren gemäß einem der vorhergehenden Ansprüche, **dadurch gekennzeichnet, dass** die mindestens eine Lichtquelle (4) ausgewählt ist aus der Gruppe bestehend aus LED-Strahler, Halogenleuchte und Laserstrahler.

9. Verfahren gemäß einem der vorhergehenden Ansprüche, **dadurch gekennzeichnet, dass** mindestens zwei Lichtquellen (4), bevorzugt mindestens drei, vier, fünf, sechs, sieben, acht, neun oder zehn Lichtquellen (4), auf den Raumbereich (3, 3') gerichtet sind.

10. Verfahren gemäß Anspruch 9, **dadurch gekennzeichnet, dass** die mindestens zwei Lichtquellen (4)
a) jeweils eine unterschiedliche charakteristische Lichtfrequenz aussenden; und/oder
b) von der Datenverarbeitungsvorrichtung (5) als relevant für den bestimmten Raumbereich (3, 3') identifiziert werden; und/oder
c) jeweils unterschiedliche dritte Signale (9) von der Datenverarbeitungsvorrichtung (5) erhalten, bevorzugt unterschiedliche Signale in Bezug auf den kodierten Helligkeitswert und/oder Farbwert, insbesondere unterschiedliche Signale in Abhängigkeit von der Art der Lichtquellen (4) und/oder der Entfernung der Lichtquellen (4) zu dem bestimmten Raumbereich (3, 3').

11. Verfahren gemäß einem der vorhergehenden Ansprüche, **dadurch gekennzeichnet, dass** der gewünschte Raumbereich (3, 3') mindestens ein Objekt und/oder Subjekt enthält oder im Wesentlichen daraus besteht, bevorzugt mindestens einen Einrichtungsgegenstand und/oder mindestens ein Lebewesen, besonders bevorzugt einen Tisch, Stuhl und/oder eine Couch.

12. Verfahren gemäß einem der vorhergehenden Ansprüche, **dadurch gekennzeichnet, dass** der Raumbereich (3, 3') selbst keine Lichtquelle enthält und bevorzugt nur zur Lichtstreuung und/oder Lichtreflektion geeignet ist.

13. System enthaltend eine Datenverarbeitungsvorrichtung (5), ein mobiles Kommunikationsgerät (2) und mindestens eine Lichtquelle (4), wobei die Datenverarbeitungsvorrichtung (5) eine Empfangsvorrichtung, eine Sendevorrichtung und eine Datenverarbeitungseinheit enthält, wobei
die Datenverarbeitungseinheit so konfiguriert ist, dass sie ein zweites Signal (8) von der Empfangsvorrichtung empfangen kann, wobei das zweite Signal (8) in einen bestimmten Helligkeitswert und/oder Farbwert umgewandelt wird und basierend hierauf mindestens ein drittes Signal (9) generiert wird, das an die Sendevorrichtung weiterleitet wird,
**dadurch gekennzeichnet, dass**
die Datenverarbeitungseinheit so konfiguriert ist, dass sie ein erstes Signal (7) von der Empfangsvorrichtung empfangen kann, wobei das erste Signal (7) in einen bestimmten Raumbereich (3, 3') umgewandelt wird und diesem Raumbereich (3, 3') mindestens eine Lichtquelle (4) zugeordnet wird, und wobei
das System konfiguriert ist, das Verfahren gemäß einem der Ansprüche 1 bis 12 durchzuführen.

14. System gemäß Anspruch 13 wobei das mobile Kommunikationsgerät (2) die Datenverarbeitungsvorrichtung (5) enthält.

## Claims

1. Method to easily and selectively adjust a desired brightness and/or colour of a specific spatial region (3, 3') onto which at least one light source (4) is directed, comprising the steps:
a) Using a mobile communication device to target the specific spatial region (3, 3'), with the mobile communication device recognising the targeted spatial region (3, 3'), converting this information into at least a first signal (7) and sending it to a data processing device (5);
b) receiving the at least one first signal (7) by the data processing device (5), with the data processing device (5) converting the at least one first signal (7) into the specific spatial region (3, 3');
c) inputting into the mobile communication device, with the mobile communication device converting the input into at least one second signal (8) that is send to the data processing device (5);
d) receiving the at least one second signal (8) by the data processing device (5), with the data processing device (5) converting the at least one second signal (8) into a specific brightness value and/or colour value, generating at least one third signal (9) based on this and sending it to the at least one light source (4);
e) receiving the at least one third signal (9) by the at least one light source (4), with the at least one light source (4) converting the at least one third signal (9) into the specified brightness value and/or colour value and changing its brightness and/or colour accordingly, so that the desired brightness and/or colour is achieved in the specific spatial region (3, 3') **characterised in that**
in step b), on the basis of the determined spatial region (3, 3'), the data processing device (5) identifies at least one light source (4) as relevant for setting a desired brightness and/or colour, and
the input into the mobile communication device in step c) is an input into the mobile communication device of the desired brightness and/or colour of the spatial region (3, 3').

2. Method according to claim 1, **characterised in that** identifying the spatial region (3, 3') in step a) comprises the alignment of an optical sensor in the mobile communication device with the spatial region (3, 3'), with the spatial region (3, 3') being preferably identifiable via a tracking system of the mobile communication element.

3. Method according to any one of the preceding claims, **characterised in that** the mobile communication device contains at least one element selected from the group consisting of an optical sensor, a gravimetric sensor, an acceleration sensor, a gyroscope, a magnetic sensor, GPS, and a radio element, preferably an optical camera, a near-field communication radio element and/or a Bluetooth radio element.

4. Method according to any one of the preceding claims, **characterised in that** the mobile communication device is selected from the group consisting of communication devices with at least one input key and/or at least one pressure-sensitive input surface, preferably selected from the group consisting of mobile phones, smartphones (2), tablet PCs, GPS display devices, and electronic compasses.

5. Method according to any one of the preceding claims, **characterised in that** the data processing device (5)
is selected from the group consisting of PCs, preferably PCs with a receiving element and/or transmitting element for near-field communication radio waves and/or Bluetooth radio waves and/or receives the signals from the mobile communication device via electrical lines, optical lines, and/or radio waves.

6. Method according to any one of the preceding claims, **characterised in that** the electronic communication device is physically connected to the data processing device (5), preferably the data processing device (5) being integrated into the mobile communication device.

7. Method according to any one of the preceding claims, **characterised in that** the desired brightness and/or colour is entered via a touch movement and/or sliding movement on the mobile communication device, preferably by a touch movement and/or sliding movement on a touch screen, on buttons, and/or on a slide control of the mobile communication device, particularly preferably by a sliding movement upwards, downwards, to the left and/or to the right.

8. Method according to any one of the preceding claims, **characterised in that** the at least one light source (4) is selected from the group consisting of LED emitters, halogen lamps, and laser emitters.

9. Method according to any one of the preceding claims, **characterised in that** at least two light sources (4), preferably at least three, four, five, six, seven, eight, nine or ten light sources (4), are directed towards the spatial region (3, 3').

10. Method according to claim 9, **characterized in that** the at least two light sources (4)
a) emit a different characteristic light frequency; and/or
b) are identified by the data processing device (5) as relevant for the specific spatial region (3, 3'); and/or
c) receive different third signals (9) from the data processing device (5), preferably different signals with respect to the coded brightness value and/or colour value, in particular different signals depending on the type of light sources (4) and/or the distance of the light sources (4) from the specific spatial region (3, 3').

11. Method according to any one of the preceding claims, **characterised in that** the desired spatial region (3, 3') contains at least one object and/or subject or essentially consists of this, preferably at least one piece of furniture and/or at least one living being, particularly preferably a table, chair and/or a couch.

12. Method according to any one of the preceding claims, **characterised in that** the spatial region (3, 3') itself does not contain any light source and is preferably only suitable for light scattering and/or light reflection.

13. System comprising a data processing device (5), a mobile communication device (2), and at least one light source (4), wherein the data processing device (5) comprises a receiving device, a transmitting device, and a data processing unit,
the data processing unit is configured to receive a second signal (8) from the receiving device, the second signal (8) being converted into a specific brightness value and/or colour value and, based on this, at least one third signal (9) is generated, which is forwarded to the transmitting device,
**characterised in that**
the data processing unit is configured such that it can receive a first signal (7) from the receiving device, with the first signal (7) being converted into a specific spatial region (3, 3') and at least one light source (4) being assigned to this spatial region (3, 3'), and
the system is configured to perform the method according to any one of claims 1 to 12.

14. System according to claim 13, with the mobile communication device (2) including the data processing device (5).

## Revendications

1. Procédé d'ajustement simple et sélectif d'une luminosité et/ou d'une couleur souhaitée d'une région spatiale (3, 3') spécifique vers laquelle est dirigée au moins une source de lumière (4), comprenant les étapes consistant à :
a) cibler la région spatiale (3, 3') spécifique avec un appareil de communication mobile, dans lequel l'appareil de communication mobile reconnait la région spatiale (3, 3') ciblée, convertit cette information en au moins un premier signal (7) et l'envoie à un dispositif de traitement de données (5) ;
b) recevoir le au moins un premier signal (7) grâce au dispositif de traitement de données (5), dans lequel le dispositif de traitement de données (5) convertit le au moins un premier signal (7) en une région spatiale (3, 3') spécifique ;
c) entrer l'information dans le dispositif de communication mobile, dans lequel le dispositif de communication mobile convertit l'entrée en au moins un deuxième signal (8) qui est envoyé au dispositif de traitement de données (5) ;
d) recevoir le au moins un deuxième signal (8) grâce au dispositif de traitement de données (5), dans lequel le dispositif de traitement de données (5) convertit le au moins un deuxième signal (8) en une valeur de luminosité et/ou de couleur spécifique, génère au moins un troisième signal (9) en se basant sur ladite valeur et l'envoie vers la au moins une source de lumière (4) ;
e) recevoir le au moins un troisième signal (9) grâce à la au moins une source de lumière (4), dans lequel la au moins une source de lumière (4) convertit le au moins un troisième signal (9) en la valeur de luminosité et/ou de couleur spécifique et modifie en conséquence sa luminosité et/ou sa couleur de sorte que la luminosité et/ou la couleur souhaitée est obtenue dans la région spatiale (3, 3') spécifique
**caractérisé en ce que**
à l'étape b), le dispositif de traitement de données (5) identifie au moins une source de lumière (4) comme étant pertinente pour l'ajustement d'une luminosité et/ou d'une couleur souhaitée en raison de la région spatiale (3, 3') spécifique, et
l'entrée d'information dans l'appareil de communication mobile à l'étape c) est une entrée de la luminosité et/ou de la couleur souhaitées de la région spatiale (3, 3') dans l'appareil de communication mobile.

2. Procédé selon la revendication 1, **caractérisé en ce que** l'identification de la région spatiale (3, 3') à l'étape a) comprend l'alignement d'un capteur optique du dispositif de communication mobile avec la région spatiale (3, 3'), dans lequel la région spatiale (3, 3') est de manière préférée identifiée par l'intermédiaire d'un système de suivi de l'élément de communication mobile.

3. Procédé selon l'une quelconque des revendications précédentes, **caractérisé en ce que** le dispositif de communication mobile contient au moins un élément choisi dans le groupe constitué d'un capteur optique, d'un capteur gravimétrique, d'un capteur d'accélération, d'un gyroscope, d'un capteur magnétique, d'un GPS et d'un élément radio, de manière préférée d'une caméra optique, d'un élément radio de communication en champ proche et/ou un élément radio Bluetooth.

4. Procédé selon l'une quelconque des revendications précédentes, **caractérisé en ce que** l'appareil de communication mobile est choisi dans le groupe constitué d'appareils de communication comprenant au moins une touche d'entrée et/ou au moins une surface d'entrée tactile, de manière préférée choisi dans le groupe constitué des téléphones mobiles, smartphones (2), tablettes PC, appareils d'affichage GPS et boussoles électroniques.

5. Procédé selon l'une quelconque des revendications précédentes, **caractérisé en ce que** le dispositif de traitement de données (5)
est choisi dans le groupe constitué des PC, de manière préférée des PC comprenant un élément de réception et/ou un élément d'émission pour un rayonnement radio de communication en champ proche et/ou un rayonnement radio Bluetooth et/ou reçoit les signaux de l'appareil de communication mobile par l'intermédiaire de lignes électriques, de lignes optiques et/ou d'ondes radio.

6. Procédé selon l'une quelconque des revendications précédentes, **caractérisé en ce que** l'appareil de communication électronique est relié matériellement au dispositif de traitement de données (5), de manière préférée le dispositif de traitement de données (5) est intégré dans l'appareil de communication mobile.

7. Procédé selon l'une quelconque des revendications précédentes, **caractérisé en ce que** l'entrée de la luminosité et/ou de la couleur souhaitée est effectuée par un mouvement tactile et/ou un mouvement de coulissement sur l'appareil de communication mobile, de manière préférée par un mouvement tactile et/ou un mouvement de coulissement sur un écran tactile, sur des touches et/ou sur un curseur de l'appareil de communication mobile, de manière particulièrement préférée par un mouvement de coulissement vers le haut, le bas, la gauche et/ou la droite.

8. Procédé selon l'une quelconque des revendications précédentes, **caractérisé en ce que** la au moins une source de lumière (4) est choisie dans le groupe constitué d'un projecteur LED, d'une lampe halogène et d'un projecteur laser.

9. Procédé selon l'une quelconque des revendications précédentes, **caractérisé en ce qu'**au moins deux sources de lumière (4), de manière préférée au moins trois, quatre, cinq, six, sept, huit, neuf ou dix sources de lumière (4), sont dirigées vers la région spatiale (3, 3').

10. Procédé selon la revendication 9, **caractérisé en ce que** les au moins deux sources de lumière (4)
a) émettent respectivement une fréquence lumineuse caractéristique différente ; et/ou
b) sont identifiées par le dispositif de traitement de données (5) comme étant pertinentes pour la région spatiale (3, 3') spécifique ; et/ou
c) reçoivent respectivement des troisièmes signaux (9) différents en provenance du dispositif de traitement de données (5), de manière préférée des signaux différents en ce qui concerne la valeur de luminosité et/ou la valeur de couleur codée, en particulier des signaux différents en fonction du type de source de lumière (4) et/ou de la distance entre les sources de lumière (4) et la région spatiale (3, 3') spécifique.

11. Procédé selon l'une quelconque des revendications précédentes, **caractérisé en ce que** la région spatiale (3, 3') souhaitée contient au moins un objet et/ou un sujet ou en est essentiellement constituée, de manière préférée au moins un objet d'ameublement et/ou au moins un être vivant, de manière particulièrement préférée une table, une chaise et/ou un canapé.

12. Procédé selon l'une quelconque des revendications précédentes, **caractérisé en ce que** la région spatiale (3, 3') elle-même ne contient pas de source de lumière et n'est de manière préférée appropriée que pour la diffusion et/ou la réflexion de lumière.

13. Système comprenant un dispositif de traitement de données (5), un dispositif de communication mobile (2) et au moins une source de lumière (4), dans lequel le dispositif de traitement de données (5) comprend un dispositif de réception, un dispositif d'émission et une unité de traitement de données, dans lequel
l'unité de traitement de données est configurée pour recevoir un deuxième signal (8) en provenance du dispositif de réception, dans lequel le deuxième signal (8) est converti en une valeur de luminosité et/ou de couleur spécifique et au moins un troisième signal (9), qui est transmis au dispositif d'émission, est généré en se basant sur ladite valeur,
**caractérisé en ce que**
l'unité de traitement de données est configurée pour pouvoir recevoir un premier signal (7) en provenance du dispositif de réception, dans lequel le premier signal (7) est converti en une région spatiale (3, 3') spécifique et au moins une source de lumière (4) est associée à ladite région spatiale (3, 3'), et dans lequel
le système est configuré pour mettre en œuvre le procédé selon l'une quelconque des revendications 1 à 12.

14. Système selon la revendication 13, dans lequel le dispositif de communication mobile (2) contient le dispositif de traitement de données (5).
